# FASCICULE DE BREVET EUROPEEN

(11) **EP 2 266 289 B1**
(45) Date de publication et mention de la délivrance du brevet: **17.07.2013**
(21) Numéro de dépôt: 09731314.2
(22) Date de dépôt: 30.03.2009
(51) Int. Cl.: H04L 29/06, G06F 21/00, H04L 12/24

(54) **MODE DE COMMUNICATION DE DEFENSE POUR UN EQUIPEMENT APTE A COMMUNIQUER AU MOYEN DE DIFFERENTS SERVICES DE COMMUNICATION**
ABWEHRKOMMUNIKATIONSMODUS FÜR EIN ÜBER VERSCHIEDENE KOMMUNIKATIONSDIENSTE KOMMUNIKATIONSFÄHIGES GERÄT
DEFENCE COMMUNICATION MODE FOR AN APPARATUS ABLE TO COMMUNICATE BY MEANS OF VARIOUS COMMUNICATION SERVICES

(30) Priorité: 31.03.2008 FR 0852098
(43) Date de publication de la demande: 29.12.2010
(73) Titulaire: FRANCE TELECOM, 75015 Paris (FR)
(72) Inventeur: KIESSLING, Lars, F-92320 Chatillon (FR); WEENS, Franck, F-92190 Meudon (FR); BARRANCO, Jocelyn, F-92130 Issy Les Moulineaux (FR)
(74) Mandataire: Caspar, Catherine
(86) Numéro de dépôt international: PCT/FR2009/050537
(87) Numéro de publication internationale: WO 2009/125151

(56) Documents cités:
- EP-A- 1 533 700
- FR-A- 2 888 071
- US-A1- 2003 009 699
- US-A1- 2006 174 342

## Description

L'invention concerne un mode de communication de défense pour un équipement apte à communiquer au moyen de différents services de communication. Elle concerne plus précisément un équipement et un procédé de communication mettant en oeuvre un tel mode de communication.

L'invention s'applique au domaine technique des communications machine à machine, noté M2M en abrégé. Dans ces techniques de communications, on considère deux catégories de machines:
- la première catégorie est constituée par les équipements destinés à être commandés à distance et comportant une application embarquée; il s'agit par exemple d'un distributeur automatique de boisson, d'un compteur d'eau, etc;
- la deuxième catégorie est constituée par les systèmes informatiques intégrant une application de gestion destinée à communiquer avec une application embarquée dans un équipement afin de mettre en oeuvre la gestion à distance de cet équipement.

La gestion à distance d'équipement peut concerner différents aspects: la supervision de l'équipement, son pilotage à distance, le paramétrage à distance et la mise à jour à distance de l'équipement ou encore la mise en oeuvre de fonctions de télésurveillance, de télémétrie, de télédétection, etc. Cette gestion à distance est effectuée le plus souvent par échanges de messages entre l'application embarquée et l'application de gestion.

Dans le domaine des communications M2M, le bon fonctionnement des équipements supervisés à distance est essentiel. Contrairement aux terminaux informatiques de type ordinateur personnel ou aux terminaux de type téléphone mobile auxquels sont associés au moins un utilisateur, les équipements M2M à superviser ne sont pas conçus pour faire face à une attaque informatique ou tentative de piratage en provenance d'une entité tierce du réseau de télécommunication. En particulier, aucun utilisateur n'est susceptible d'intervenir ou de prendre une décision au moment où une attaque informatique ou tentative de piratage est détectée sur le terminal.

Le document FR 2888071 décrit un module de communication associé à un ou plusieurs équipements apte à établir et gérer les communications établies entre cet équipement et une plateforme de gestion d'équipements.

Le document US2003/009699 se rapporte à une méthode de détection d'intrusion à partir de mesures et données statistiques.

Le document US2006/174342 divulgue une méthode de lutte contre les attaques consistant à verrouiller certains ports de communication.

Les inventeurs ont donc constaté le besoin d'une solution de protection d'équipement qui puisse être mise en oeuvre sans intervention d'un utilisateur.

L'invention a pour objet, selon un premier aspect, un système selon la revendication 1.

L'invention prévoit la mise en oeuvre d'un mécanisme local d'auto-défense, ce mécanisme s'appliquant aux communications établies au moyen du service de communication pour lequel une détection d'anomalie a eu lieu.

La mise en oeuvre du mécanisme local d'auto-défense est entièrement automatisable, ne nécessitant pas d'intervention d'un utilisateur, mais étant basée seulement sur une détection d'anomalies et la mise en oeuvre d'une protection locale par restriction des possibilités de communication avec l'équipement.

Le mécanisme local d'auto-défense est choisi de manière ciblée et appropriée par rapport à l'anomalie détectée, car fonction du service de communication pour lequel une détection d'anomalie a eu lieu.

L'invention tire profit du fait que l'équipement est apte à communiquer au moyen de différents services de communication. Contrairement aux terminaux utilisant un seul service de communication, il est envisageable de rejeter ou inhiber toute communication au moyen d'un des services de communication, car l'équipement conserve la possibilité de communiquer au moyen d'autres services de communication pour lesquels aucune attaque ou anomalie n'a été détectée.

L'invention a pour objet, selon un deuxième aspect, un procédé de protection selon la revendication 7.

Les avantages énoncés pour l'équipement selon l'invention sont transposables directement au procédé selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un équipement et conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Intemet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel ou qu'à un composant matériel. Un composant logiciel correspond à un ou plusieurs programmes d'ordinateur, un ou plusieurs sous-programmes d'un programme, ou de manière plus générale à tout élément d'un programme conçu pour mettre en oeuvre une fonction ou un ensemble de fonctions. Un composant matériel correspond à tout élément d'un ensemble matériel (ou hardware) conçu pour mettre en oeuvre une fonction ou un ensemble de fonctions.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un équipement selon l'invention;
- la figure 2 représente un organigramme d'un mode de réalisation du procédé selon l'invention.

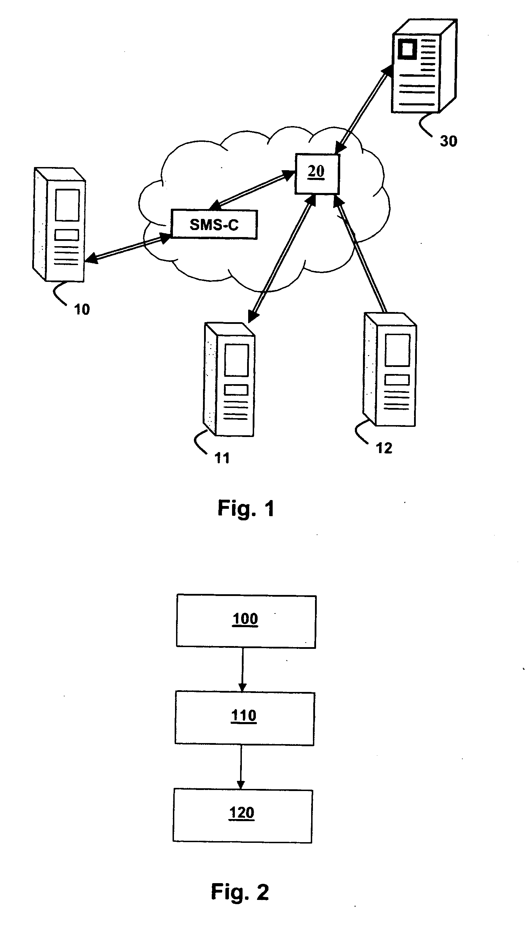

La figure 1 représente de manière schématique un système de communication intégrant un équipement 10 selon l'invention. Cet équipement 10 est apte à communiquer à travers un réseau de communication 15, optionnellement via une plateforme de service 20, avec un terminal 30 de gestion à distance d'équipement.

Une communication entre l'équipement 10 et le terminal 30 est établie soit en mode message, soit en mode session. L'équipement 10 est donc conçu pour communiquer au moyen de différents services de communication compatibles avec le réseau de communication 15 et disponibles pour la transmission de données à travers le réseau 15, que ce soit des services de communication en mode message ou en mode session. Les communications en mode message s'effectuent au moyen de messages ou paquets, porteurs des données à transmettre, tandis que les communications en mode session permettent l'établissement d'un flux de données entre deux entités.

Dans la suite de la description, on suppose, à titre d'exemple, que le réseau de communication 15 est un réseau cellulaire, de type GSM (Global System for Mobile communication). Dans ce réseau, les différents services de communication disponibles pour la transmission de messages ou données sont par exemples les suivants:
- le service de messages courts SMS (Short Message Service) ou MMS (Multimédia Message Service),
- le service supplémentaire non structuré de transmission de données USSD (Unstructered Supplementary Service Data),
- le service de transmission de données en mode circuit CSD (Circuit Switched Data) ou HSCSD (High Speed Circuit Switched Data),
- le service général de radiocommunication en mode paquet GPRS (General Packet Radio Service).

Ces différents services de communication permettent un envoi de message d'une entité du réseau à une autre entité.

L'équipement 10 est doté d'une interface de communication permettant à l'équipement 10 d'accéder au réseau de télécommunication 15 et d'établir des communications en mode session ou en mode message à travers ce réseau. Cette interface de communication comprend un modem compatible avec la nature du réseau 15, en l'occurrence un modem GSM.

L'équipement 10 comprend un module de traitement de messages pour le traitement des messages reçus via l'interface de communication et l'établissement d'éventuels messages de réponse aux messages reçus. Le module de traitement est couplé avec une mémoire de stockage des messages reçus en attente d'être traités.

L'équipement 10 comprend également un module de détection dont la fonction est de détecter, dans une communication établie avec l'équipement, une ou des anomalies, parmi une liste d'anomalies prédéfinies. Dans le contexte de l'invention, on s'intéresse plus particulièrement aux anomalies constituant potentiellement une menace ou un risque pour l'intégrité et la sécurité de l'équipement 10. Cependant l'invention est applicable également à des anomalies purement fonctionnelles, ne résultant pas d'une intention de nuire.

A titre d'exemple, les anomalies ci-dessous sont susceptibles d'être détectées par le module de détection.

Dans le cas d'une communication établie au moyen du service SMS, l'anomalie détectée est par exemple la réception d'un nombre important, supérieur à une valeur de seuil, de messages. Une telle anomalie entraîne une augmentation du temps de réponse à un message de l'équipement et réduit donc ses performances, notamment sa capacité à répondre en temps voulu aux messages reçus. Lorsque l'équipement fonctionne sur batterie, cette anomalie entraîne une consommation d'énergie inutile et une décharge trop rapide de la batterie. En outre, lorsqu'une telle anomalie atteint un degré élevé et qu'elle a pour conséquence le remplissage de la mémoire de stockage des messages reçus, elle rend impossible la réception par l'équipement 10 d'autres messages, notamment des messages utiles.

Dans le cas d'une communication établie au moyen du service CSD, l'anomalie détectée est par exemple la réception de demandes de mise en communication à haute fréquence, supérieure à une valeur de seuil. Une telle anomalie empêche l'équipement 10 de recevoir demandes de mise en communication utiles au service ou en tout cas réduit sa capacité à recevoir et traiter de tels appels.

Dans le cas d'une communication établie au moyen du service GPRS, utilisant le protocole IP (Internet Protocol), et lorsque l'équipement 10 est en connecté en contexte PDP ouvert, l'anomalie détectée est par exemple la réception d'un nombre important de requêtes de connexions. Une telle anomalie génère un coût à la charge du propriétaire de l'équipement 10 et occupe inutilement les ressources de l'équipement 10;

Dans le cas d'une communication établie au moyen du protocole HTTP utilisant IP, et lorsque l'équipement 10 comprend un module serveur pour le stockage de données d'authentification, des attaques par déni de service ("Denial of Service") ou par force brutale ("brute force cracking") visant à obtenir des données d'authentification d'un terminal distant entraînent une indisponibilité de l'équipement 10, voire risquent de compromettre l'intégrité des données d'authentification stockée par le serveur.

Le module de détection est conçu pour analyser les communications entrantes et effectuer les mesures ou opérations de comptage pour, en fonction du service de communication utilisé pour établir une communication entrante, déterminer la présence d'une anomalie, c'est-à-dire déterminer si au moins un critère donné associé au service de communication utilisé est vérifié par le ou les valeurs mesurées ou décomptées.

Par exemple, dans le cas d'une communication établie au moyen du service SMS, le module de détection compte le nombre de messages reçus et présents simultanément dans la mémoire de stockage et signale la présence d'une anomalie lorsque ce nombre est supérieur à une valeur de seuil donnée.

Selon un autre exemple, dans le cas d'une communication établie au moyen du service CSD, le module de détection mesure la fréquence des appels CSD par comptage du nombre de d'appels reçus pendant une période de temps donnée et signale la présence d'une anomalie lorsque ce nombre est supérieur à une valeur de seuil donnée.

En cas de détection d'une anomalie pour un service de communication donné, le module de détection est conçu pour signaler cette détection à un module de gestion de communication de l'équipement.

Le module de gestion de communication est conçu pour mettre en oeuvre, en lieu et place du mode de communication normal, un mode de communication de défense consistant à restreindre, par rapport au mode de communication normal, l'admission ou l'établissement de communications par l'équipement 10 lorsque ces communications sont établies au moyen d'un service de communication pour lequel une détection a eu lieu.

De préférence, le basculement en mode de communication de défense ou mode "auto-défense" est effectué dès la première détection d'une anomalie pour éviter que l'équipement 10 ne soit exposé trop longtemps aux attaques extérieures, en provenance d'une entité du réseau 15.

Le module de gestion de communication est conçu par exemple pour rejeter ou ignorer toute demande de mise en communication reçue par l'équipement 10 lorsque cette communication est destinée à être établie au moyen du service de communication pour lequel une détection a eu lieu.

Selon une variante, le module de gestion de communication est conçu pour inhiber tout établissement par l'équipement 10 d'une communication au moyen d'un service de communication pour lequel une détection a eu lieu.

L'invention tire profit du fait que l'équipement est apte à communiquer au moyen de différents services de communication. Il est donc envisageable de rejeter ou inhiber toute communication au moyen d'un des services de communication, tout en conservant la possibilité de communiquer au moyen d'autres services de communication pour lesquels aucune attaque ou anomalie n'a été détectée. La protection est optimale, puisqu'on supprime les possibilités d'établissement d'une communication entrante, voire sortante.

En outre de type de protection peut être mis en place simplement et automatique suite à détection d'une attaque ou comportement anormal via un des services de communication.

Selon une autre variante, le module de gestion de communication est conçu pour, lorsque le service de communication pour lequel une détection a eu lieu est un service de communication par messages, inhiber tout traitement de messages émis au moyen de ce service de communication par messages.

Selon encore une autre variante, le module de gestion de communication est conçu pour, lorsque le service de communication est un service de communication par messages, inhiber l'envoi à l'équipement de messages par saturation de la mémoire de stockage des messages reçus par l'équipement 10.

Selon encore une autre variante, le module de gestion de communication est conçu pour demander une modification d'un identifiant affecté à l'équipement et dont la connaissance est nécessaire pour établir une communication avec l'équipement 10. Cet identifiant est typiquement une adresse de l'équipement 10.

Selon encore une autre variante, le module de gestion de communication est conçu pour, en cas de détection, envoyer une alerte à une plateforme de service au moyen d'un service de communication différent du service de communication pour lequel une détection a eu lieu. Cette plateforme de service est par exemple une plateforme via laquelle transitent les communications à destination de l'équipement 10 ou une plateforme de gestion à distance de cet équipement.

Les différentes variantes décrites ci-dessus peuvent être combinées entre elles selon le besoin et/ou selon la nature ou la gravité de l'anomalie détectée. Par exemple, en fonction de la fréquence des tentatives d'appels utilisant le service CSD et détectées comme étant des anomalies, un mécanisme de plus en plus protecteur peut être mis en place, d'abord en ne répondant pas aux appels CSD, puis en rejetant les appels CSD, puis enfin inhibant toute communication via le service CSD.

De manière à mettre en oeuvre un mécanisme de défense approprié par rapport à l'anomalie ou l'attaque détectée, la variante utilisée est choisie en fonction du service de communication pour lequel la détection a eu lieu et/ou de la nature et/ou de la gravité de l'anomalie détectée.

Différents exemples de mécanisme de défense appropriés sont donnés ci-dessous.

### Premier exemple: cas d'une anomalie détectée pour le service CSD

L'anomalie détectée est la réception de demandes de mise en communication à haute fréquence. Dans ce cas, l'équipement 10 ne répond pas à une demande de mise en communication ou rejette une telle demande. Le rejet d'une demande de mise en communication a l'avantage, en cas d'utilisation d'une batterie non rechargeable, d'économiser la batterie de l'équipement et de prolonger la durée d'utilisation de cette batterie.

En complément, l'équipement 10 envoie au moyen d'un service de communication différent du service CSD, par exemple au moyen du service SMS ou USSD, une alerte à une plateforme de service, susceptible de prendre des mesures nécessaires pour un ensemble d'équipements. Ces mesures consistent par exemple à bloquer les attaques sur les équipements distants ayant émis des alertes et/ou à avertir l'ensemble des équipements, afin de provoquer le basculement préventif de l'ensemble des équipements en mode auto-défense.

### Deuxième exemple: cas d'une anomalie détectée pour le service SMS

L'anomalie détectée est la réception d'un nombre important de messages. Dans ce cas, l'équipement 10 interrompt le traitement des messages entrants reçus au moyen du service SMS. Si, après cette interruption, d'autres messages sont reçus, la mémoire de stockage des messages SMS reçus continue à se remplir. Lorsque la capacité maximum de stockage est atteinte, les messages SMS suivants ne sont plus transmis à l'équipement 10 mais stockés temporairement par un centre serveur de message du réseau 15 (SMS-C, SMS Center), responsable de l'acheminement de ces messages. Par conséquent le centre serveur de message ne transmettra plus de messages SMS à l'équipement 10. Ce qui a pour effet de libérer les ressources de l'équipement 10.

L'équipement 10 filtre ensuite les messages reçus stockés dans la mémoire de stockage et traite les messages autorisés et/ou supprime les messages non autorisés. En complément, l'équipement 10 utilise si besoin, au moins temporairement, un service de communication différent du service SMS pour envoyer des messages.

En complément l'équipement 10 envoi, au moyen d'un service de communication différent du service SMS, une alerte à une plateforme de service, susceptible de prendre des mesures nécessaires pour un ensemble d'équipements, comme celles décrites ci-dessus dans le cas du premier exemple. Dans ce cas, l'envoi de l'alerte peut également être effectuée au moyen du service SMS.

### Troisième exemple: cas d'une anomalie détectée pour le service GPRS

L'anomalie détectée est la réception d'un nombre important de requêtes de connexions. Dans ce cas, l'équipement 10 se déconnecte du réseau GPRS, inhibant ainsi toute possibilité de réception ou d'établissement d'une communication au moyen du service GPRS.

Dans le cas où l'équipement 10 ne possède pas d'adresse IP fixe, l'équipement 10 se reconnectera automatiquement au réseau GPRS afin d'obtenir une nouvelle adresse IP.

Si l'équipement 10 possède une adresse IP fixe, l'équipement 10 envoie au moyen d'un service de communication différent du service GPRS, par exemple au moyen du service SMS ou USSD, une alerte à une plateforme de service, susceptible de prendre des mesures nécessaires pour un ensemble d'équipements, comme celles décrites ci-dessus dans le cas du premier exemple. L'équipement 10 attend ensuite de recevoir un message en provenance de la plateforme, au moyen par exemple du service SMS avant de se reconnecter. Lorsque les mesures nécessaires ont été prises, la plateforme de service en avertit l'équipement 10 qui peut alors se connecter à nouveau sur le réseau GPRS avec la même adresse IP fixe.

Un mode de réalisation du procédé selon l'invention est maintenant décrit par référence à la figure 2. Ce procédé comprend les étapes 100 à 120 qui sont exécutées répétitivement. L'étape 100 est de préférence exécutée en permanence, les étapes 110 et 120 étant exécutées en cas de détection à l'étape 100.

A l'étape 100, le module de détection de l'équipement est initialisé. A partir de ce moment là, le module de détection effectue l'analyse de chaque communication entrante, par mesure ou comptage selon ce qui est décrit ci-dessus.

En cas de détection à l'étape 100 d'une anomalie faisant partie d'une liste prédéfinie d'anomalies, le module de détection informe à l'étape 110 le module de gestion de communication de cette détection, lui indiquant notamment le service de communication pour lequel la détection a eu lieu ainsi que la nature de l'anomalie et son amplitude (valeur mesurée ou décomptée).

A l'étape 120, le module de gestion de communication met en oeuvre un mécanisme de défense approprié. Le mécanisme de défense sélectionné est fonction de la détection effectuée, notamment du service de communication pour lequel la détection a eu lieu ainsi que la nature de l'anomalie et son amplitude. Ce mécanisme de défense est appliqué aux communications établies via le service de communication pour lequel une détection a eu lieu. L'équipement 10 est donc en mesure de continuer à communiquer au moyen d'autres services de communication qui sont à sa disposition, mais pour lesquels aucune anomalie ou attaque n'a été détectée.

L'invention est applicable de manière large à tout type d'équipement. Il trouve une application particulièrement avantageuse dans le domaine du M2M pour lequel des terminaux coopèrent avec une plateforme centralisée pour la mise en oeuvre de services qui doivent être fiable, sans forcément nécessiter d'intervention humaine.

L'invention permet en particulier une automatisation de la mise en oeuvre d'un mécanisme d'auto-défense local, destiné à protéger l'équipement mettant en oeuvre ce mécanisme.

L'invention permet en outre une limitation de l'énergie consommée par l'équipement. En particulier, en cas d'utilisation d'une batterie longue durée non rechargeable, la durée d'utilisation de la batterie est prolongée.

L'invention permet également une réduction des coûts de communication par limitation du nombre de messages entrants et plus généralement, une augmentation de la qualité de service des communications avec les équipements concernés et de la sécurité de ces équipements.

## Revendications

1. Système comprenant une plateforme de service et un équipement (10) apte à communiquer avec ladite plateforme de service à travers un réseau de communication (15) au moyen de différents services de communication disponibles pour transmettre des données via ledit réseau de communication, ledit équipement comprenant,
- des moyens de détection (100) d'une anomalie dans une communication établie ou à établir avec ledit équipement au moyen d'un dit services de communication,
- des moyens de mise en oeuvre (120) d'un mode de communication de défense dans lequel des communications destinées à être établies avec ledit équipement au moyen d'un dit service de communication pour lequel une détection a eu lieu sont inhibées, les communications destinées à être établies au moyen d'un autre dit service de communication étant autorisées.
- des moyens pour, en cas de détection, envoyer une alerte à ladite plateforme de service au moyen d'un service de communication différent du service de communication pour lequel une détection a eu lieu,
ladite plateforme comprenant des moyens pour, sur réception d'une dite alerte, provoquer un basculement dans ledit mode de communication de défense des équipements d'un ensemble d'équipements communicant avec ladite plateforme de service.

2. Système selon la revendication 1, dans lequel les moyens de mise en oeuvre comprennent des moyens pour rejeter ou ignorer toute demande de mise en communication reçue par ledit équipement lorsque cette communication est destinée à être établie au moyen dudit service de communication.

3. Système selon la revendication 1, dans lequel les moyens de mise en oeuvre comprennent des moyens pour inhiber tout établissement par ledit équipement d'une communication au moyen dudit service de communication.

4. Système selon la revendication 1, dans lequel les moyens de mise en oeuvre comprennent des moyens pour, lorsque ledit service de communication est un service de communication par messages, inhiber tout traitement des messages émis au moyen dudit service de transport de messages.

5. Système selon la revendication 1, dans lequel les moyens de mise en oeuvre comprennent des moyens pour, lorsque ledit service de communication est un service de communication par messages, inhiber l'envoi audit équipement de messages par saturation d'une mémoire de stockage des messages reçus par ledit équipement.

6. Système selon la revendication 1, dans lequel les moyens de mise en oeuvre comprennent des moyens pour modifier un identifiant affecté audit équipement et dont la connaissance est nécessaire pour établir une communication avec ledit équipement.

7. Procédé de protection d'un équipement (10) apte à communiquer avec une plateforme de service à travers un réseau de communication (15) au moyen de différents services de communication disponibles pour transmettre des données via ledit réseau de communication, ledit procédé comprenant,
- une étape (100) de mise en oeuvre par ledit équipement de moyens de détection d'une anomalie dans une communication établie avec ledit équipement au moyen d'un dit service de communication,
- une étape (120) de mise en oeuvre par ledit équipement d'un mode de communication de défense dans lequel des communications destinées à être établies avec ledit équipement au moyen d'un dit service de communication pour lequel une détection a eu lieu sont inhibées, les communications destinées à être établies au moyen d'un autre dit service de communication étant autorisées,
- une étape d'envoi par ledit équipement, en cas de détection, d'une alerte à ladite plateforme de service au moyen d'un service de communication différent du service de communication pour lequel une détection a eu lieu,
- une étape lors de laquelle ladite plateforme provoque, sur réception de ladite alerte, un basculement dans ledit mode de communication de défense des équipements d'un ensemble d'équipements communicant avec ladite plateforme de service.

8. Programme informatique comprenant des instructions logicielles pour la mise en oeuvre d'un procédé selon la revendication 7 lorsque ledit programme est exécuté par un processeur de données.

9. Support d'enregistrement lisible par un processeur de données sur lequel est enregistré un programme comprenant des instructions de code de programme pour l'exécution des étapes d'un procédé selon la revendication 7.

## Patentansprüche

1. System, das eine Dienstplattform und eine Ausrüstung (10) enthält, die über ein Kommunikationsnetz (15) mittels verschiedener Kommunikationsdienste, die zur Verfügung stehen, um Daten über das Kommunikationsnetz zu übertragen, mit der Dienstplattform kommunizieren kann, wobei die Ausrüstung enthält
- Einrichtungen (100) zur Erfassung einer Anomalie in einer mittels eines der Kommunikationsdienste mit der Ausrüstung aufgebauten oder aufzubauenden Kommunikation,
- Einrichtungen (120) zur Durchführung eines Abwehrkommunikationsmodus, wobei mittels eines Kommunikationsdiensts, für den eine Erfassung stattgefunden hat, mit der Ausrüstung aufzubauende Kommunikationen verhindert werden, während die mittels eines anderen Kommunikationsdiensts aufzubauenden Kommunikationen erlaubt sind,
- Einrichtungen, um im Fall einer Erfassung mittels eines anderen Kommunikationsdiensts als des Kommunikationsdiensts, für den eine Erfassung stattgefunden hat, einen Alarm an die Dienstplattform zu senden,
wobei die Plattform Einrichtungen enthält, um bei Empfang eines Alarms ein Umschalten der Ausrüstungen einer Einheit von mit der Dienstplattform kommunizierenden Ausrüstungen in den Abwehrkommunikationsmodus zu bewirken.

2. System nach Anspruch 1, wobei die Durchführungseinrichtungen Einrichtungen enthalten, um jede von der Ausrüstung empfangene Kommunikationsforderung zurückzuweisen oder zu ignorieren, wenn diese Kommunikation mittels des Kommunikationsdiensts aufgebaut werden soll.

3. System nach Anspruch 1, wobei die Durchführungseinrichtungen Einrichtungen enthalten, um jeden Aufbau einer Kommunikation mittels des Kommunikationsdiensts durch die Ausrüstung zu verhindern.

4. System nach Anspruch 1, wobei die Durchführungseinrichtungen Einrichtungen enthalten, um, wenn der Kommunikationsdienst ein Mitteilungs-Kommunikationsdienst ist, jede Verarbeitung der mittels des Mitteilungstransportdiensts gesendeten Mitteilungen zu verhindern.

5. System nach Anspruch 1, wobei die Durchführungseinrichtungen Einrichtungen enthalten, um, wenn der Kommunikationsdienst ein Mitteilungs-Kommunikationsdienst ist, das Senden von Mitteilungen an die Ausrüstung durch Sättigung eines Speichers der von der Ausrüstung empfangenen Mitteilungen zu verhindern.

6. System nach Anspruch 1, wobei die Durchführungseinrichtungen Einrichtungen enthalten, um eine Kennung zu ändern, die der Ausrüstung zugewiesen ist und deren Kenntnis notwendig ist, um eine Kommunikation mit der Ausrüstung aufzubauen.

7. Verfahren zum Schutz einer Ausrüstung (10), die über ein Kommunikationsnetz (15) mittels verschiedener Kommunikationsdienste, die zur Verfügung stehen, um Daten über das Kommunikationsnetz zu übertragen, mit einer Dienstplattform kommunizieren kann, wobei das Verfahren enthält,
- einen Schritt (100) der Verwendung von Einrichtungen zur Erfassung einer Anomalie in einer mit der Ausrüstung mittels eines Kommunikationsdiensts aufgebauten Kommunikation durch die Ausrüstung,
- einen Schritt (120) der Durchführung eines Abwehrkommunikationsmodus durch die Ausrüstung, wobei mittels eines Kommunikationsdiensts, für den eine Erfassung stattgefunden hat, mit der Ausrüstung aufzubauende Kommunikationen verhindert werden, während die mittels eines anderen Kommunikationsdiensts aufzubauenden Kommunikationen erlaubt sind,
- einen Schritt des Sendens, im Fall einer Erfassung, eines Alarms an die Dienstplattform durch die Ausrüstung mittels eines anderen Kommunikationsdiensts als des Kommunikationsdiensts, für den eine Erfassung stattgefunden hat,
- einen Schritt, in dem die Plattform bei Empfang des Alarms ein Umschalten der Ausrüstungen einer Einheit von mit der Dienstplattform kommunizierenden Ausrüstungen in den Abwehrkommunikationsmodus bewirkt.

8. EDV-Programm, das Software-Anweisungen für die Durchführung eines Verfahrens nach Anspruch 7 enthält, wenn das Programm von einem Datenprozessor ausgeführt wird.

9. Von einem Datenprozessor lesbarer Aufzeichnungsträger, auf dem ein Programm aufgezeichnet ist, das Programmcodeanweisungen zur Ausführung der Schritte eines Verfahrens nach Anspruch 7 enthält.

## Claims

1. System comprising a service platform and an appliance (10) able to communicate with said service platform via a communication network (15) by means of various communication services available for transmitting data via said communication network, said appliance comprising,
- means (100) of detecting an anomaly in a communication that is established or to be established with said appliance by means of one of said communication services,
- means (120) of implementing a defense communication mode in which the communications intended to be established with said appliance by means of a communication service for which a detection has occurred are inhibited, the communications intended to be established by means of another said communication service being allowed,
- means for, in case of detection, sending an alert to said service platform by means of a communication service that is different from the communication service for which a detection has occurred,
- said platform comprising means for, upon receipt of said alert, triggering a switchover to said defense communication mode of the appliances of a set of appliances communicating with said service platform.

2. System according to Claim 1, in which the implementation means comprise means for rejecting or disregarding any communication request received by said appliance when this communication is intended to be established by means of said communication service.

3. System according to Claim 1, in which the implementation means comprise means for inhibiting any establishment by said appliance of a communication by means of said communication service.

4. System according to Claim 1, in which the implementation means comprise means for, when said communication service is a message-based communication service, inhibiting any processing of the messages sent by means of said message transport service.

5. System according to Claim 1, in which the implementation means comprise means for, when said communication service is a message-based communication service, inhibiting the routing to said appliance, of messages by saturation of a memory for storing the messages received by said appliance.

6. System according to Claim 1, in which the implementation means comprise means for modifying an identifier assigned to said appliance and knowledge of which is necessary to establish a communication with said appliance.

7. Method for protecting an appliance (10) able to communicate with a service platform via a communication network (15) by means of various communication services, said method comprising,
- a step (100) for implementing by said equipment means for detecting an anomaly in a communication established with said appliance by means of a communication service,
- a step (120) for implementing by said equipment a defense communication mode in which the communications intended to be established with said appliance by means of a communication service for which a detection has occurred are inhibited, the communications intended to be established by means of another communication service being allowed,
- a step for sending, in case of detection, an alert by said appliance to said service platform by means of a communication service that is different from the communication service for which a detection has occurred,
- a step in which said platform, upon receipt of said alert, triggers a switchover to said defense communication mode of the appliances of a set of appliances communicating with said service platform.

8. Computer program comprising software instructions for implementing a method according to Claim 7 when said program is executed by a data processor.

9. Storage medium that can be read by a data processor on which is stored a program comprising program code instructions for executing the steps of a method according to Claim 7.
